Europäisches Patentamt

European Patent Office

Office européen des brevets

(19)

(11) Veröffentlichungsnummer: **0 285 683**
**B1**

(12) **EUROPÄISCHE PATENTSCHRIFT**

(45) Veröffentlichungstag der Patentschrift:
16.05.90

(21) Anmeldenummer: 87105086.0

(22) Anmeldetag: 06.04.87

(51) Int. Cl.⁵: **B63J 3/02,** F16D 3/00,
F16D 3/06, F16D 3/74,
B63H 23/32

(54) Schiffsantriebsanlage.

(43) Veröffentlichungstag der Anmeldung:
12.10.88 Patentblatt 88/41

(45) Bekanntmachung des Hinweises auf die Patenterteilung:
16.05.90 Patentblatt 90/20

(84) Benannte Vertragsstaaten:
CH DE FR GB IT NL

(56) Entgegenhaltungen:
EP-A- 0 140 010

SHIPBUILDING & MARINE ENGINEERING
INTERNATIONAL, Band 106, Nr. 1271, September 1983,
Seiten 356-357, London, GB; M. LUNKE: "How heavy
fuel has influenced flexible coupling design"

(73) Patentinhaber: RENK TACKE GmbH, Gögginger
Strasse 73, D-8900 Augsburg(DE)

(72) Erfinder: Hille, Werner, Tristanstrasse 13 b,
D-4440 Rheine 1(DE)

## Beschreibung

Die Erfindung betrifft eine Schiffsantriebsanlage mit einer direkt wirkenden Hauptantriebsmaschine und einer propellerseitig angeordneten Schiffshilfsmaschine, beispielsweise Bordgenerator zur Stromerzeugung, welche von der Hauptantriebsmaschine bzw. von der Propellerwelle über ein durch ein eigenes Fundament abgestütztes Übersetzungsgetriebe mit einem als Hohlrad zur Durchführung der Propellerwelle ausgebildeten Antriebsrad antreibbar ist, wobei das Antriebsrad zur Einleitung des Antriebsdrehmomentes mit einer Kupplung, bestehend aus radial montierbaren dämpfungselastischen Kupplungsgliedern versehen ist.

Zum Antrieb von Hilfsmaschinen an Bord von Schiffen ist es bekannt, Energie von der Hauptantriebsanlage abzuzweigen. Hierzu werden beispielsweise Wellengeneratoren verwendet, deren Läufer unmittelbar auf einem Abschnitt der Propellerwelle angeordnet sind. Bekannt ist auch der Einsatz von Generatorgetrieben, die unmittelbar als Reitergetriebe auf der Propellerwelle angeordnet sind. Bei beiden Lösungen ist zu beachten, daß die Propellerwelle eines Schiffes nicht nur das gewünschte Drehmoment von der Antriebsmaschine auf den Propeller überträgt, sondern von Drehschwingungen und Wechselmomenten belastet wird und Verlagerungen aller Art unterworfen ist. Deshalb müssen Wellengeneratoren zwischen dem Läufer und Stator mit einem erheblichen Spalt ausgeführt werden, was zu Lasten des Wirkungsgrades geht. Bei der Verwendung eines Getriebes zur Übersetzung der Drehzahlen von den Umdrehungen der Hauptantriebsmaschine zur anzutreibenden Hilfsmaschine führen die genannten Störfaktoren zu einer erheblichen Belastung mit der Gefahr von Schäden im Zahneingriff. Um die von der Hauptantriebsanlage und von dem Propeller ausgehenden Drehschwingungen und Wechseldrehmomente von dem Übersetzungsgetriebe für eine Schiffshilfsmaschine fernzuhalten, wurde nach der DE-OS 33 31 480 = EP-A 0 140 010 eine Ausführung für eine Schiffsantriebsanlage nach dem einleitend genannten Gattungsbegriff vorgeschlagen. Diese Ausführung hat zusätzlich den Vorteil, daß ein rascher Ausbau der elastischen Kupplungselemente zur Anpassung an veränderte Betriebsverhältnisse möglich ist. Durch die Modifizierungsmöglichkeit der Kupplungselemente können diese den motor- und propellerseitigen Schwingungen und Wechselmomenten angepaßt und die Störfaktoren besser beherrscht werden.

Aufbauend auf der vorbekannten Konstruktion liegt der Erfindung die Aufgabe zu Grunde, die dämpfungselastische Kupplung so auszubilden, daß zusätzlich Axialverschiebungen zwischen der Propellerwelle und dem Getriebe sowie Längenänderungen der elastischen Elemente bei ihrer Verdrehung aufgenommen werden können. Die Erfindung zur Lösung dieser Aufgabe zeichnet sich dadurch aus, daß zwischen den dämpfungselastischen Kupplungsgliedern und dem Antriebsrad ein Zwischenglied, bestehend aus einem innenverzahnten Flanschring und einem mit diesem in Eingriff stehenden konzentrischen und mit dem Antriebsrad verschraubbaren Zahnkranz angeordnet ist. Vorzugsweise sind der Flanschring und der konzentrisch darin angeordnete Zahnkranz einteilig ausgeführt, wobei der Innendurchmesser des Zahnkranzes wenigstens ebenso groß ist wie der Durchmesser der Bohrung des hohlen Antriebsrades. Auf der dem Zwischenglied gegenüberliegenden Seite der dämpfungselastischen Kupplungsglieder sind diese mit Hilfe eines Adapterflansches mit dem Propellerwellenflansch bzw. unmittelbar mit dem Schwungrad der Hauptantriebsmaschine verschraubbar. Zur Erleichterung des Ein- und Ausbaus kann der Adapterflansch auch zweiteilig ausgebildet sein.

Die Axialverschiebungen zwischen der Propellerwelle und dem Getriebe können problemlos durch die axiale Verschiebbarkeit des Flanschringes gegenüber dem mit dem Antriebsrad verschraubten Zahnkranz aufgenommen werden. Gleichzeitig können die aus der Verdrehung der dämpfungselastischen Kupplungsglieder herrührenden Längenänderungen kompensiert werden. Das Zwischenglied nimmt nur wenig Raum in Anspruch und bietet herstellungstechnisch keinerlei Schwierigkeiten.

Beim Ein- und Ausbau kann das Antriebsrad zusammen mit dem angeschraubten Zahnkranz vor dem Einbau- bzw. nach dem Entfernen der radial montierbaren dämpfungselastischen Kupplungsglieder problemlos über den Propellerwellenflansch geschoben werden.

In der Zeichnung ist ein Ausführungsbeispiel der Erfindung mit zwei verschiedenen Verbindungen zwischen der Kupplung und dem Propellerwellenflansch dargestellt und nachstehend erläutert.

Es zeigen:

Fig. 1 einen Längsschnitt durch die Kupplung der Schiffsantriebsanlage mit einem einteiligen Adapterflansch für die Verbindung mit dem Propellerwellenflansch und

Fig. 2 die Kupplung gemäß Fig. 1 mit einem abweichend ausgebildeten Adapterflansch.

Die Kupplung 1 mit den dämpfungselastischen radial ausbaubaren Kupplungsgliedern 2 ist um eine Propellerwelle 3 herumgebaut und verbindet diese mit einem hohlen Antriebsrad 4 eines nicht dargestellten Übersetzungsgetriebes für eine Schiffshilfsmaschine.

Die Propellerwelle 3 ist mit einem Flansch 5 und dieser mit dem Flansch 6 einer Motorwelle 7 verschraubt. Die Befestigungsschrauben sind mit 8 bezeichnet.

Der Propellerwellenflansch 5 ist mit einem Bund 9 ausgeführt, mit welchem ein Adapterflansch 10 mittels Schrauben 11 fest verbunden ist. Die dämpfungselastischen Kupplungsglieder 2 sind nicht nur segmentweise um die Propellerwelle 3 herumgebaut, sondern zusätzlich in einer Radialebene geteilt, bzw. es sind jeweils zwei Kupplungsglieder in Reihe geschaltet und durch Schrauben 12 miteinander verbunden. An ihren äußeren Enden sind sie mit dem Adapterflansch 10 bzw. mit einem Flanschring 13 verschraubt. Die Befestigungsschrauben tragen die Bezugsziffern 14 und 15.

Der Flanschring 13 ist mit einer Innenverzahnung 16 versehen, welche in Eingriff mit einer Außenverzahnung 17 eines Zahnkranzes 18 steht. Der Zahnkranz 18 ist mit Schrauben 19 an der Nabe des hohlen Antriebsrades 4 des Übersetzungsgetriebes befestigt. Das Antriebsrad ist in Lagern 20 des Getriebegehäuses 21 abgestützt.

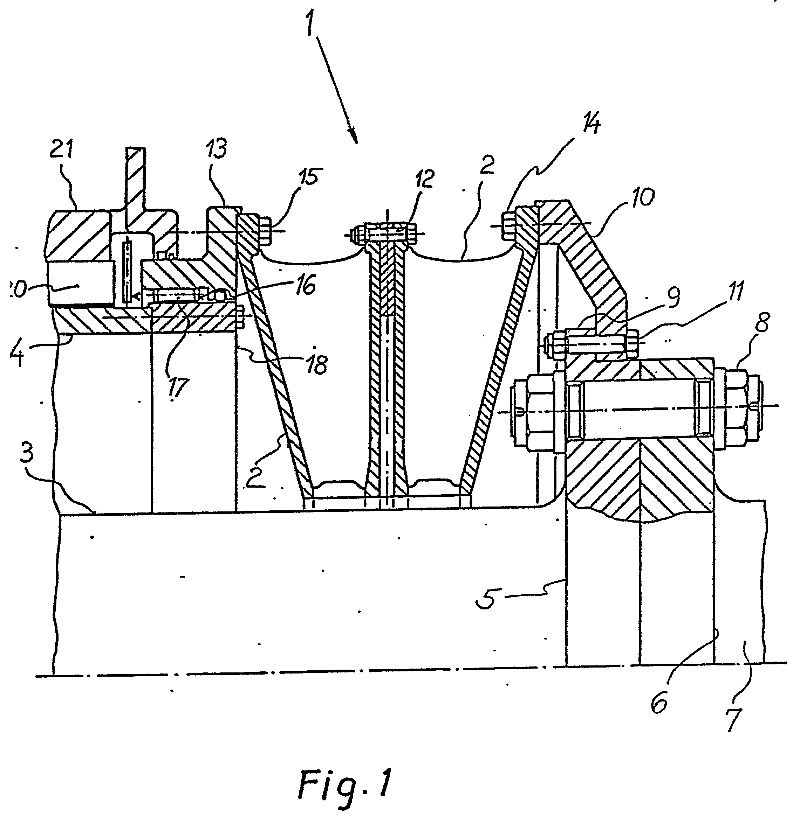

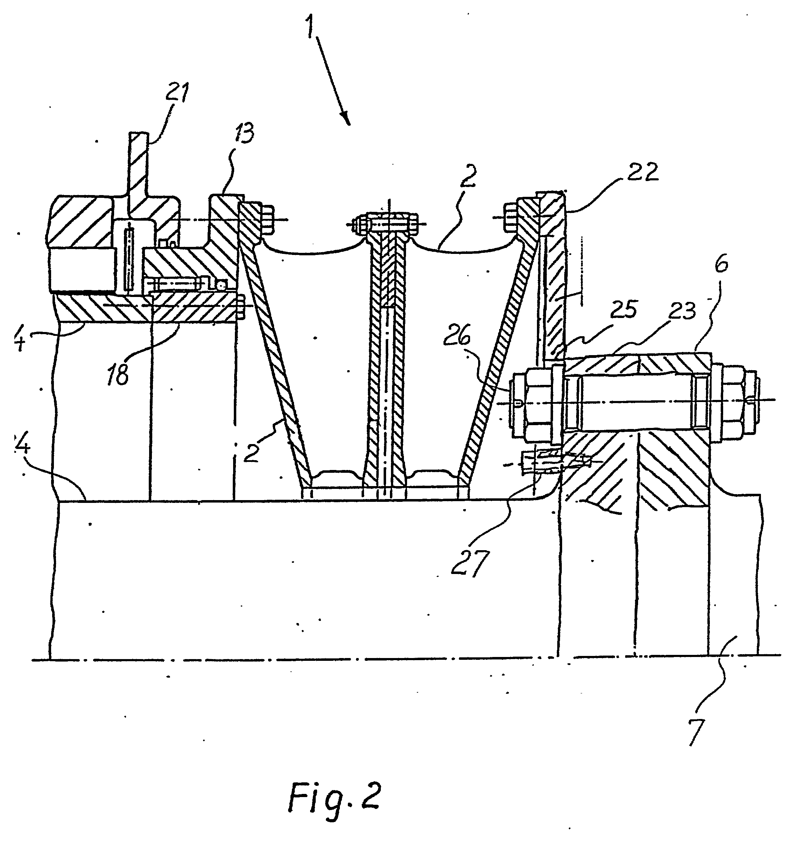

Für Um- und Nachrüstungen von Hilfsmaschinen, insbesondere Generatoren an Bord von Schiffen, wird vorzugsweise ein zweiteiliger Adapterflansch 22 zur Verbindung der Kupplung mit dem Flansch 23 der Propellerwelle 24 eingesetzt (Fig. 2). Der Adapterflansch 22 ist geteilt und erleichtert das Um- bzw. Nachrüsten bereits vorhandener Antriebsanlagen, da in diesen Fällen der Propellerwellenflansch keinen Bund für die Befestigung eines Adapterflansches gemäß Fig. 1 aufweist. Der Adapterflansch 22 ist zu diesem Zweck mit Aussparungen 25 für die Befestigungsschrauben 26 der Propellerwelle versehen. Die Befestigung erfolgt über Schrauben 27 an der dem Propeller zugewandten Fläche des Propellerwellenflansches.

Die übrigen Getriebeteile sind identisch mit denen der Fig. 1.

Zum Ein- und Ausbau des Getriebes können die Einzelteile der dämpfungselastischen Kupplung gelöst und radial entfernt werden. Das aus dem Flanschring 13 und dem Zahnrad 18 bestehende Zwischenglied kann entweder einzeln oder zusammen mit dem hohlen Antriebsrad 4 axial über den Propellerwellenflansch geschoben werden. Zu diesem Zweck ist der Innendurchmesser des Zahnkranzes 18 dem des hohlen Antriebsrades 4 angepaßt.

## Patentansprüche

1. Schiffsantriebsanlage mit einer direkt wirkenden Hauptantriebsmaschine und einer propellerseitig angeordneten Schiffshilfsmaschine, beispielsweise Bordgenerator zur Stromerzeugung, welche von der Hauptantriebsmaschine bzw. von der Propellerwelle über ein durch ein eigenes Fundament abgestütztes Übersetzungsgetriebe mit einem als Hohlrad zur Durchführung der Propellerwelle ausgebildeten Antriebsrad antreibbar ist, wobei das Antriebsrad zur Einleitung des Antriebsdrehmomentes mit einer Kupplung, bestehend aus radial montierbaren dämpfungselastischen Kupplungsgliedern versehen ist, dadurch gekennzeichnet, daß zwischen den dämpfungselastischen Kupplungsgliedern (2) und dem Antriebsrad (4) ein, aus einem innenverzahnten Flanschring (13) und einem mit diesem in Eingriff stehenden, konzentrisch angeordneten und mit dem Antriebsrad verschraubbaren Zahnkranz (18) bestehendes, Zwischenglied angeordnet ist.

2. Schiffsantriebsanlage nach Anspruch 1, dadurch gekennzeichnet, daß der Flanschring (13) und der Zahnkranz (18) einteilig ausgeführt sind und der Innendurchmesser des Zahnkranzes wenigstens ebenso groß ist wie der Innendurchmesser der Bohrung des Antriebsrades.

3. Schiffsantriebsanlage nach den Ansprüchen 1 oder 2, dadurch gekennzeichnet, daß die dämpfungselastischen Kupplungsglieder (2) mit Hilfe eines Adapterflansches (10) mit dem Propellerwellenflansch (5) verschraubbar sind.

4. Schiffsantriebsanlage nach einem der Ansprüche 1 bis 3, dadurch gekennzeichnet, daß der Adapterflansch (22) zweiteilig ausgebildet ist.

## Claims

1. Ship's propulsion system comprising a direct-acting main drive machine and a propeller-side ship's auxiliary machine, for example a shipboard generator for producing electric current, which is arranged to be driven by the main drive machine or by the propeller shaft by way of transmission gearing which is borne by an individual support and which includes a drive wheel formed as a hollow wheel through which the propeller shaft is guided, wherein the drive wheel, for the introduction of the driving torque, is provided with a coupling consisting of radially installable, elastically-damping coupling members, characterised in that an intermediate member is arranged between the elastically-damping coupling members (2) and the drive wheel (4), said intermediate member consisting of an internally-toothed flanged ring (13) and a concentrically arranged, meshing gearwheel (18) which can be screwed to the drive wheel.

2. Ship's propulsion system according to claim 1, characterised in that the flanged ring (13) and the gearwheel (18) are in one piece and the internal diameter of the gearwheel is at least as large as the internal diameter of the bore through the drive wheel.

3. Ship's propulsion system according to claim 1 or 2, characterised in that the elastically-damping coupling members (2) can be screwed to the propeller shaft flange (5) by means of an adaptor flange (10).

4. Ship's propulsion system according to one of claims 1 to 3, characterised in that the adaptor flange (22) is formed in two parts.

## Revendications

1. Système de propulsion pour bateaux, comprenant un moteur d'entraînement principal à action directe et un moteur auxiliaire de bateau, disposé côté hélice, par exemple un générateur de bord pour la génération de courant, pouvant être respectivement entraîné par le moteur d'entraînement principal ou par l'arbre d'hélice, par l'intermédiaire d'un train démultiplicateur qui prend appui sur une propre assise et comporte un pignon menant réalisé sous la forme d'un pignon creux, pour autoriser le passage de l'arbre d'hélice, le pignon menant étant pourvu, en vue d'appliquer le couple de rotation d'entraînement, d'un accouplement se composant de pièces d'accouplement douées d'élasticité d'amortissement, et pouvant être montées radialement, caractérisé par le fait qu'une pièce intercalaire (13), comprenant une collerette annulaire (13) à denture intérieure, ainsi qu'une couronne dentée (18) qui est en prise avec ladite collerette, est disposée concentriquement et peut être boulonnée sur le pignon menant, est interposée entre ledit pignon menant (4) et les pièces d'accouplement (2) à élasticité d'amortissement.

2. Système de propulsion pour bateaux, selon la revendication 1, caractérisé par le fait que la collerette annulaire (13) et la couronne dentée (18) sont réalisées d'un seul bloc, et le diamètre interne de la couronne dentée est au moins égal au diamètre interne du perçage du pignon menant.

3. Système de propulsion pour bateaux, selon les revendications 1 ou 2, caractérisé par le fait que les pièces d'accouplement (2) à élasticité d'amortissement peuvent être boulonnées sur la bride (5) de l'arbre d'hélice, à l'aide d'une bride d'adaptation (10).

4. Système de propulsion pour bateaux, selon l'une des revendications 1 à 3, caractérisé par le fait que la bride d'adaptation (22) est réalisée en deux parties.

Fig.1

*Fig.2*